# EUROPEAN PATENT APPLICATION

(11) **EP 4 588 817 A1**
(43) Date of publication of application: **23.07.2025**
(21) Application number: 24153041.9
(22) Date of filing: 22.01.2024
(51) Int. Cl.: B65D 43/00, B65D 43/02, B65G 1/00, B65G 1/04

(54) **LID FOR A CONTAINER**

(71) Applicant: AUTOSTORE TECHNOLOGY AS, 5578 Nedre Vats (NO)
(72) Inventor: Heggebø, Jørgen, 5578 Nedre Vats (NO)
(74) Representative: Kilburn & Strode LLP

(57) **Abstract**

A lid for a container of an automated storage and retrieval system comprises a lid frame having a bottom, a top, and an installation space arranged between the bottom and the top, a processing unit arranged in the installation space, and at least one replaceable sensor module, wherein at least one of the bottom and the top comprises a closed surface, wherein the at least one sensor module is in signal-communication with the processing unit, and wherein the processing unit is configured to receive signals from the at least one sensor module..

## Description

### TECHNICAL FIELD

The present invention relates to an automated storage and retrieval system for storage and retrieval of containers, in particular to a lid for a container, a stacker frame system, and an automated storage and retrieval system.

### BACKGROUND

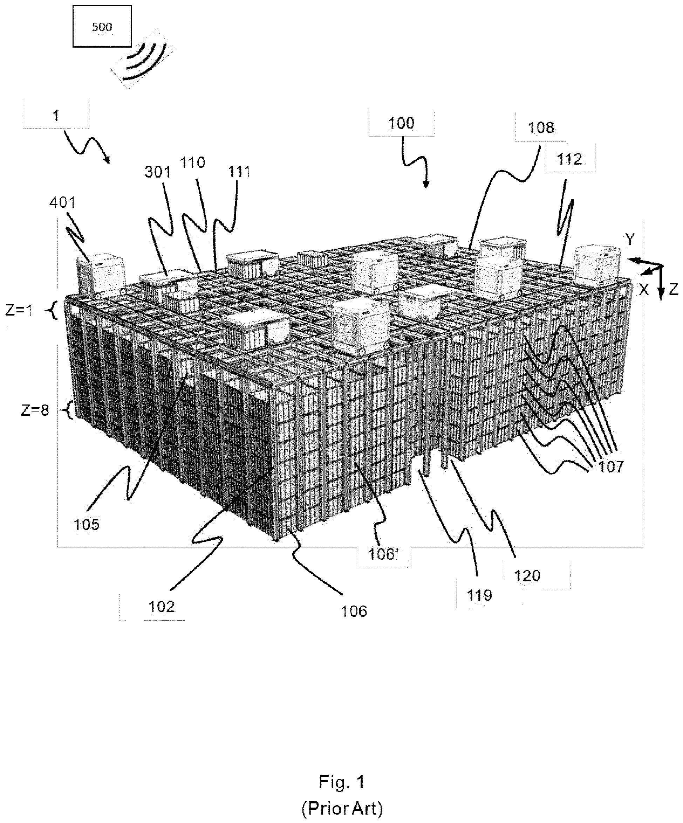

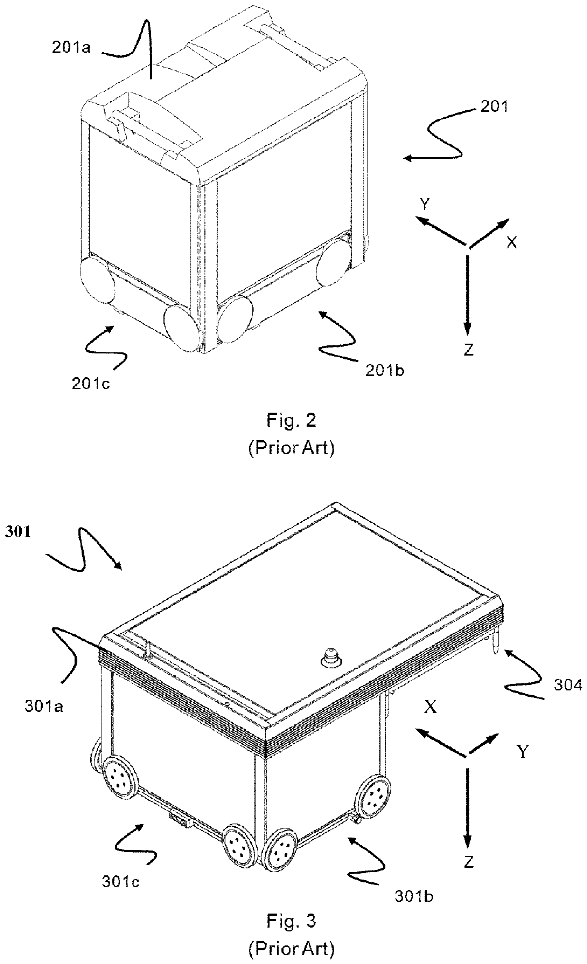

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction *X* across the top of the frame structure 100, and a second set of parallel rails 111 arranged perpendicular to the first set of rails 110 to guide movement of the container handling vehicles 201,301,401 in a second direction *Y* which is perpendicular to the first direction *X*. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X*-*Y* plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the *X* direction and in the *Y* direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

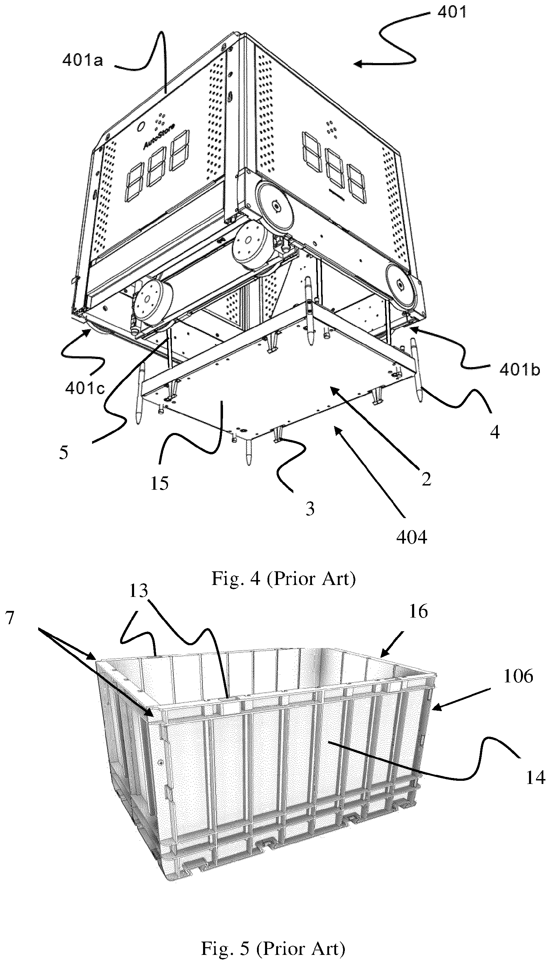

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y.* Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y=1...n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X=*17*, Y=1, Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the *X*-, *Y*- and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2O15/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns are storage columns 105, i.e. columns 105 where storage containers 106 are stored in stacks 107. In addition to storage columns 105, there are special-purpose columns within the framework structure. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

EP 3529177 B1 shows a storage system, in which a number of containers comprise service means for providing services to the container, thereby enabling individual containers within stacks to perform additional functions.

WO 2018/050816 A1 shows a grid-based growing system, in which containers hold crops and are exposed to light emitted from lighting means above the containers.

The present invention seeks to overcome or at least to a certain extent ameliorate the problems associated with the prior art.

### SUMMARY

In a first aspect, there is provided a lid for a container of an automated storage and retrieval system, the lid comprising a bottom, a top, and an installation space arranged between the bottom and the top, a processing unit arranged in the installation space, and at least one replaceable sensor module, wherein at least one of the bottom and the top comprises a closed surface, wherein the at least one sensor module is in signal-communication with the processing unit, and wherein the processing unit is configured to receive signals from the at least one sensor module.

Optionally, the processing unit is configured to conduct a communication task and/or a control task based on the received signals to influence the operation of a device inside a container, on which the lid is placed, or to influence the operation of the automated storage and retrieval system, in which a container with the lid placed thereon is stored.

The container, for which the lid is provided, may be a storage container or a stacker frame, which will be explained further below.

A storage container may comprise outer dimensions, i.e. width, length, and height, that correspond to the dimensions of common storage containers used in grid-based automated storage and retrieval systems. The interior dimensions may be e.g. 600 × 400 mm (length × width) and may have various heights, for example 200 mm, 310 mm, or 400 mm.

The storage container may comprise a top rim that completely surrounds a top opening of the storage containers. The top rim may comprise several apertures or openings for receiving or passing through gripping devices of a lifting frame of a remotely operated vehicle. The top opening of the storage container allows items to be placed into the interior space or to be removed therefrom.

The lid may be placed on top of the top rim. It may comprise recesses or cutouts that are arranged corresponding to the apertures or openings, i.e. they are horizontally aligned corresponding to each other. This allows a gripping device to pass through the respective recesses into the apertures or openings to engage with the container.

However, the lid may be configured to be placed in a top section of the storage container, such that it vertically does not protrude above the top rim. The storage container may, for example, comprise an internal shoulder or edge that allows placement of the lid inside the top opening in said manner.

A stacker frame is to be understood as a frame or box, in which a group of storage containers can be stacked one on top of another. The stacker frame itself is storable in the framework structure of the automated storage and retrieval system. The stacker frame may be liftable and lowerable by a correspondingly equipped vehicle or gantry device. The stacker frame concept allows a plurality of storage containers to be combined into a single, handleable unit, thereby accelerating the handling of a group of storage containers. The size of the stacker frame can be chosen according to specific storage system requirements of the operator of the automated storage and retrieval system. The stacker frame may be configured to receive one, two, three, four, five or more storage containers. The arrangement of a stacker frame and storage containers stacked inside the stacker frame may be referred to as a "nested stack".

The stacker frame may have side walls, a base, and an open top end, through which storage containers can be introduced or removed. The side walls and the base do not need to have a closed surface. By providing the lid according to the invention or any other kind of cover they may be designed as closed receptacles. They may be formed as gas-tight receptacles, which allows to shield the storage containers arranged inside the interior space from the exterior of the stacker frame. They may be thermally insulated. As an alternative, they may also be formed as a receptacle having partially open sides and/or a partially open base, thereby allowing air to pass through the interior space of the stacker frame and to reduce weight of the stacker frame.

The stacker frame may be equipped with several optional features according to the requirements of the operator of the automated storage and retrieval system. For example, the interior space may be thermally controlled, or actively ventilated. The air inside the interior space may be conditioned in any other desired way, e.g. humidified or adjusted in its composition.

The lid may comprise a lid frame, which carries the top and the bottom. The lid frame is to be understood as a structural base of the lid. It may be designed following one of a plurality of possible variants. For example, the lid frame may comprise a framework having a rectangular footprint. A bottom and a top can be provided as separate parts and be attached to the framework. The lid may comprise a center part following the perimeter of the framework to be enclosed by the top and bottom for cladding the framework.

As an alternative or additionally thereto the bottom and/or the top may be trough-shaped, wherein one of the bottom and the top may be attached to the other one of the bottom and the top to cover the respective other one.

The lid may also be a single part that is at least partly hollow and has an opening to the installation space, which is coverable by a cover. Mainly by providing the bottom and the top at a distance to each other at least locally, an installation space is provided.

The installation space relates to a defined volume inside the lid that can be used for installing components. According to the invention, a processing unit is arranged in the installation space. The processing unit maybe understood as a device that is capable of processing information, e.g. delivered by the at least one sensor module, for certain purposes.

Optionally, at least one sensor module is provided, which is capable of sensing or measuring a physical parameter. A large variety of different sensor modules is imaginable and shall not be limited in the context of the invention. The at least one sensor module being in signal communication with the processing unit allows to equip the lid with a sensing capability according to the requirements of a user of the automated storage and retrieval system and/or according to the intended items to be stored in the containers.

The lid according to the invention thus provides a modular infrastructure for a variety of different sensors that may be chosen or selected depending on the intended use of the respective container. For example, a sensor module for measuring the temperature inside a stacker frame is placed in the lid and the processing unit may be able to monitor the temperature inside the stacker frame. When a certain maximum temperature is exceeded and the container stores goods that need to be cooled, the automated storage and retrieval system may move the respective stacker frame to a separate cooling device for cooling the stacker frame. Further examples are provided further below.

The at least one sensor module may comprise at least one of a smoke detector, a temperature sensor, a humidity sensor, a pressure sensor, an optical sensor, an accelerometer, a gyroscope, and a magnetometer. A smoke detector may be used for detecting smoke inside or outside the container, such as in a storage column, in which the container is stored. By using a smoke detector inside or on the lid, the automated storage and retrieval system may be able to initiate a fire extinguishing process and/or removal of the respective container. A temperature sensor may be used to support a cooling cycle. For example, the automated storage and retrieval system comprises a cooling device integrated in one or more storage columns. Containers can be moved to this cooling device to have the items stored therein to be cooled. After the cooling action, the respective container may be moved to another storage column where it is not cooled. By equipping the container with a thermal insulation, a low temperature inside the container can be maintained for a certain period of time. If, however, the temperature inside the container leaves a predetermined temperature range, the respective container may be moved to the cooling device again. By providing the temperature sensor inside or on the lid, the temperature may be closely monitored. The processing unit may initiate moving the container to the cooling device if required, or to operate a cooling device stored inside the container. The same applies to a humidity sensor. If, for example, the interior space of the container is humidified or dried, a humidity sensor may enable the processing unit to monitor the humidity to initiate a repeated humidification or drying process. A pressure sensor may be used for monitoring a pressure inside the container, in particular in a container where a vacuum is provided. If, for example due to leakage or other effects, the pressure inside the container exceeds a predetermined minimum pressure, a vacuum device attached to, attachable to or integrated into the respective container may be operated. An optical sensor may be used, for example, for vertical farming applications to monitor for the growth of crops. An accelerometer, a gyroscope and a magnetometer may be useful for monitoring movements and orientations of the lid and thus, of the container, on which it is placed.

The lid may comprise a sensor module interface for removably placing different sensor modules in or on the lid and connecting it with the processing unit. The sensor module interface may comprise an electrical interface for connecting it with the processing unit. It may also comprise a mechanical interface to mechanically connect the respective sensor module with the lid. The at least one sensor module has a complementary interface that can be brought into engagement with the sensor module interface, such that the sensor module is connectable to the processing unit.

The sensor module interface may comprise an electrical plug-in sensor module socket. The sensor module may then easily be plugged into socket of the lid. For example, the sensor module may comprise a plug, which can be put into the sensor module socket, wherein both plug and socket have corresponding electrical contacts to connect the sensor module with the processing unit. The socket may comprise a first mechanical engagement element that engages with a second mechanical engagement element of the plug, such that the plug is mechanically engaged by the socket to hold the sensor module in or on the lid.

The bottom of the lid frame may have at least one receiving space, in which the at least one sensor module interface is arranged, and/or wherein the at least one sensor module may have a sensor module enclosure having a shape complementary to the receiving space. The receiving space may be a part of the installation space or be separate thereto. The module housing may protect the actual sensor and provide an device that is easy to handle, to ship or to store, without the sensor being exposed to a damage risk.

The at least one sensor module may be configured to snap-fit into the lid. In particular, it may be configured to snap-fit into the receiving space. The sensor module may be inserted into a predetermined position in or on the lid. By applying a mechanical pressure onto the sensor module, a hook or another movable element may be urged away from a neutral position by the sensor module, while it snaps back into the neutral position, where it engages a geometric feature of the sensor module to hold it in place. Preferably, the snap-fit connection may be released manually.

The processing unit may be in communication with or comprises a communication device, wherein the processing unit may be configured to transmit signals to an exterior device through the communication device. The exterior device may be the control system of the automated storage and retrieval system. However, the exterior device may also be a device associated with the container, such as a temperature control device arranged in the container. As an alternative or in addition thereto, the exterior device may be integrated into one of the storage columns of the automated storage and retrieval system or even outside the framework structure. This may be a cooling device, an access station or another piece of equipment that belongs to the automated storage and retrieval system.

The lid may comprise a first electrical connector, which is connected to the processing unit and which is configured to connect with a second electrical connector external to the lid to receive electrical power from an external power source. The term "external" is to be understood as external to the lid. For example, the power source may be arranged in the container itself. It may also be arranged in upright members of the framework structure or a component attached to the upright members. It may transfer electrical power via conductors and/or via inductive elements, i.e. a pair of induction coils.

The first electrical connector may be arranged in the perimetral edge surface. Then, the second connector may be placed in or reach into a top rim of the container. It may, however, also be arranged laterally thereto in a space between a pair of upright members of the framework structure.

The lid may comprise a lighting unit configured to emit light into a direction beneath the bottom of the lid to illuminate an interior space of the storage container, on which the lid is placed. The lighting unit may illuminate crops inside the container if the automated storage and retrieval system is or comprises a vertical farming system. The lighting unit may also be used for supporting the visibility of objects stored inside the container for an optical sensor module. The lighting unit may be operated if the optical sensor is operated.

The lighting unit may be coupled with the processing unit, wherein the processing unit is configured to selectively operate the lighting unit by supplying it with electrical power. Hence, the processing may be configured to receive a signal from external to the lid, e.g. from a control system of the automated storage and retrieval system, to operate the lighting unit.

The lid may comprise an internal power source coupled with the processing unit and/or the at least one sensor module. The power source may be a battery, a rechargeable battery or a capacitor, preferably a super capacitor. The lid may be configured to allow a recharging of the rechargeable battery or the capacitor by providing a recharging connector or the like.

The lid may comprise a memory connected to the processing unit for storing instructions to be executed by the processing unit, and a programming interface couplable with the memory and/or the processing unit for uploading or modification of instructions to the memory. The programming interface may be provided by the communication device mentioned above or any other, particularly wireless, communication device. However, it may be provided by a hardware port, such as a USB port or the like.

A first set of instructions may be stored in the memory, wherein the first set of instructions, when executed by the processing unit, cause the processing unit to load a second set of instructions uploaded by a user via the programming interface, and to execute the second set of instructions. The user may thus upload instructions dedicated for the individual use of the lid, and/or the container, and/or the automated storage and retrieval system. The lid acts as a platform for individual modifications and processes.

The lid may comprise lid connecting recesses that are configured to engage with a lifting frame of a lifting device positioned above the lid. Consequently, the lid may be lifted by a lifting device comparable to a container. This simplifies the handling of the lid.

In a second aspect, there is provided a stacker frame system for an automated storage and retrieval system, the automated storage and retrieval system comprising a framework structure defining a plurality of storage columns, the stacker frame system comprising a stacker frame configured to be stored in one of the storage columns, wherein the stacker frame has an open top end and is configured to accommodate a plurality of storage containers stored one on top of another in a vertical stack in an interior space of the stacker frame, wherein the stacker frame has side walls and a base, and wherein the stacker frame system comprises a lid according to the above that can be placed in or on the top end.

The top end of the stacker frame and the bottom of the lid may be configured such that the lid completely rests inside the top end when placed on the stacker frame. The lid may thus rest on an inner rim inside the stacker frame.

In a third aspect there is provided an automated storage and retrieval system, comprising a framework structure defining a plurality of storage columns, a stacker frame system according to the above, a stacker frame lifter and a container lifter, wherein the stacker frame lifter and the container lifter are configured to move in two perpendicular directions above the storage columns, wherein the container lifter is configured to retrieve a storage container via the open top end of a top stacker frame, and wherein the stacker frame lifter is configured to retrieve stacker frames accommodated in a storage column.

The automated storage and retrieval system may comprise a lid storage column for storing a plurality of lids according to the above.

The lid storage column may comprise at least one second electrical connector coupled with a power source for recharging the internal power source, wherein the at least one second electrical connector may be arranged in the lid storage column in a position to contact the first electrical connector on a lid stored in the dedicated lid storage column.

In a fourth aspect, there is provided a method of operating an automated storage and retrieval system comprising a lid for a container in accordance with first aspect, the method comprising receiving signals from the at least one sensor module and conducting a communication task and/or a control task based on the received signals.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig. 5 is a perspective view of a storage container according to the prior art.
Fig. 6 shows an automated storage and retrieval system with stacker frames in a perspective view.
Figs. 7a to 7c show stacker frames in a perspective view, a side view and a top view.
Fig. 8 shows a stacker frame with storage containers in a perspective partial sectional view.
Fig. 9a shows a container handling vehicle handling a storage container inside a stacker frame in a perspective view.
Fig. 9b shows a stored stacker frame and a storage container inside the stacker frame in a top view.
Figs. 10 and 11 show a lifting frame engaging a stacker frame in lateral views.
Figs. 12a and 12b show the lifting frame in perspective views.
Figs. 13a to 14b show a lifting frame engaging a storage container in perspective views and top views.
Fig. 15, 16 and 17 show a stacker frame with a lid in a plurality of perspective views.

### DETAILED DESCRIPTION

In the following, embodiments of the invention will be discussed in more detail with reference to the appended drawings. It should be understood, however, that the drawings are not intended to limit the invention to the subject-matter depicted in the drawings.

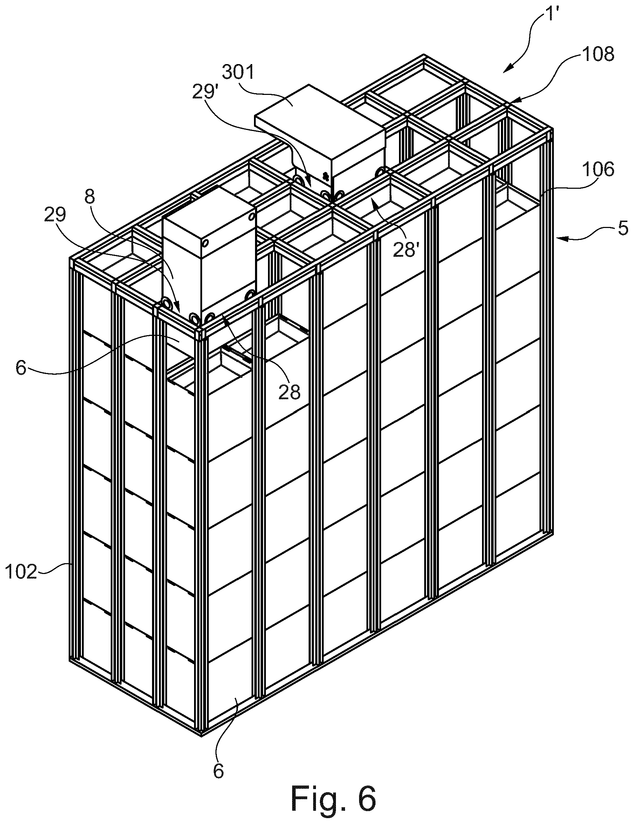

General aspects of automated storage and retrieval systems that use stacker frames 6 is shown in figs. 6 to 14b, in order to explain the particularities of the stacker frames 6. Fig. 6 shows a storage system 1' having a framework structure 100, in which stacker frames 6 are stored. The framework structure 100 may be similar to the framework structure 100 according to the prior art system shown in Fig. 1. At the top of the framework structure 100 a rail system 108 is arranged, on which a container handling vehicle 301 and a stacker frame lifter 8 operate.

The framework structure 100 of the automated storage and retrieval system 1 is constructed in a similar manner to the prior art framework structure 100 described above in connection with Figs. 1-3. That is, the framework structure 100 comprises a number of upright members 102, and comprises a rail system 108 extending in the X direction and Y direction.

The framework structure 100 comprises storage columns 105 provided between the upright members 102 wherein storage containers 106 or, in the illustrated case, stacker frames 6 are stackable in stacks 107 within the storage columns 105.

The framework structure 100 can be of any size. In particular it is understood that the framework structure 100 can be considerably wider and/or longer and/or deeper than disclosed in Fig. 1. For example, the framework structure 100 may have a horizontal extent of more than 700×700 columns and a storage depth of more than twelve containers.

Each of the stacker frames 6 has a top end 9 for allowing a vertical passage of a storage container 106 and is configured to accommodate a plurality of the storage containers 106 stored one on top of another in a vertical stack. The stacker frame 6 is configured to support the bottom of a lowermost storage container 106 in a stack of storage containers 106 accommodated in the stacker frame 6.

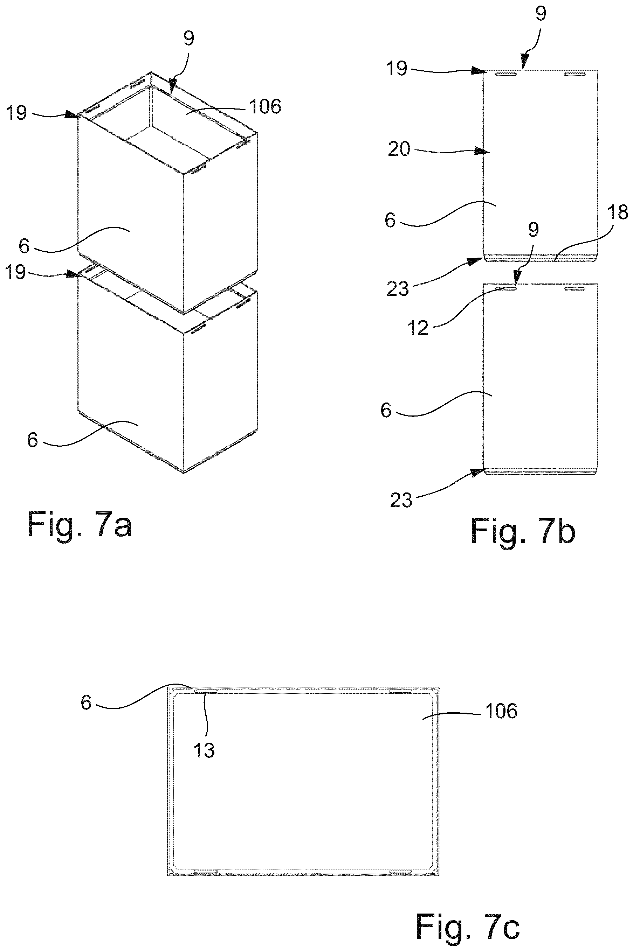

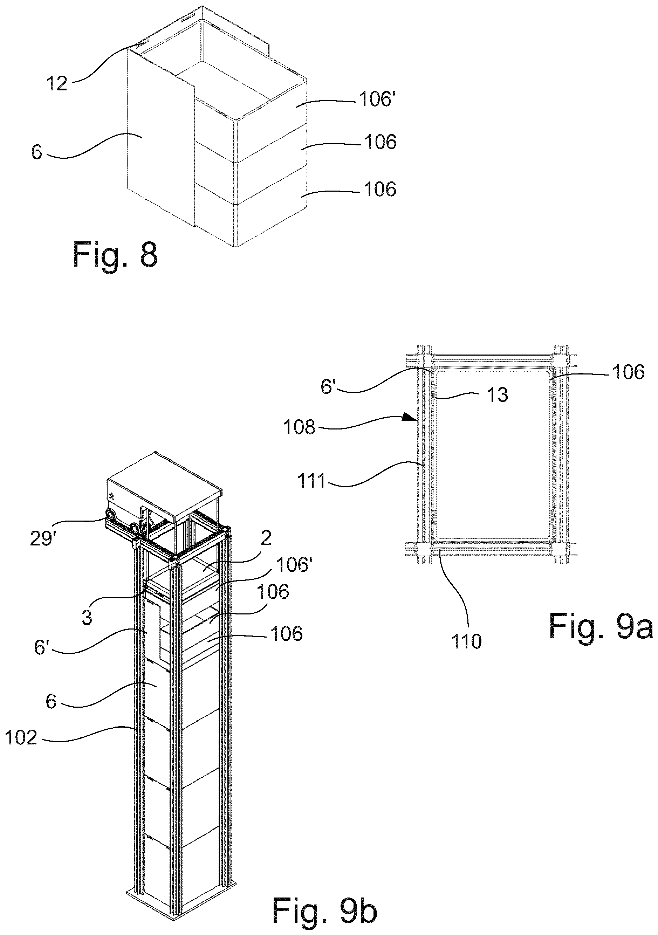

The stacker frame 6, as e.g. illustrated in Figs. 7a, 7b, 7c and 8, comprises a bottom section 18, for supporting a lower end of a stack of storage containers 106, and a top section 19 having the top end 9, through which a storage container 106 may pass in a vertical direction. Side walls 20 extend between the bottom section 18 and the top section 19. Connecting recesses 12 are arranged at an upper portion of opposite side walls 20, which in the shown example are associated with short sides of the stacker frame 6. The connecting recesses 12 are exemplarily arranged at a level above an upper level of a stack of storage containers 106 arranged in the stacker frame 6.

To improve the stability of a stack of stacker frames, the bottom section 18 of the stacker frames 6 may have a recessed portion 23 having an outer periphery being smaller than, i.e. fitting within, an inner periphery of the top section 19. In this manner, the stacker frames 6 may be stacked on top of another while horizontal movement between them is restricted.

The stacker frame lifter 8 (Fig. 6) and the container handling vehicle 301 are configured to move in two perpendicular directions on the rail system 108. Both the stacker frame lifter 8 and the container handling vehicle 301 comprise a first set of wheels 28, 28' and a second set of wheels 29, 29' for moving on the rail system 108. The sets of wheels may be as described for the prior art container handling vehicles in Figs. 2-4.

The container handling vehicle 301 may be similar to the prior art container handling vehicle 301. The container handling vehicle 301 may comprise a first type of lifting frame 2 having grippers 3, which is shown in Figs. 9b. The grippers 3 may be configured to releasably engage container connecting recesses 13. Exemplarily, the container connecting recesses 13 are arranged in an upper rim 16 of a storage container 106 as illustrated in Fig. 9a. The first type of lifting frame 2 may be similar to the prior art lifting frame shown in Fig. 4.

The container handling vehicle 301 is configured to retrieve a storage container 106 via an open top end 9 of an upper stacker frame 6' of a stack of stacker frames 6, see for example Fig. 9a. The upper stacker frame 6' in Fig. 8 has a cut-away section to better illustrate the stacking of the storage containers 106 inside the stacker frame 6', which is also shown in Fig. 8.

To retrieve a storage container 106 from a stacker frame 6, the first type of lifting frame 2 has an outer periphery being smaller than an inner periphery of the stacker frame 6. The inner periphery of the stacker frame 6 may be configured to guide the vertical movement of the first type of lifting frame 2 within the stacker frame 6.

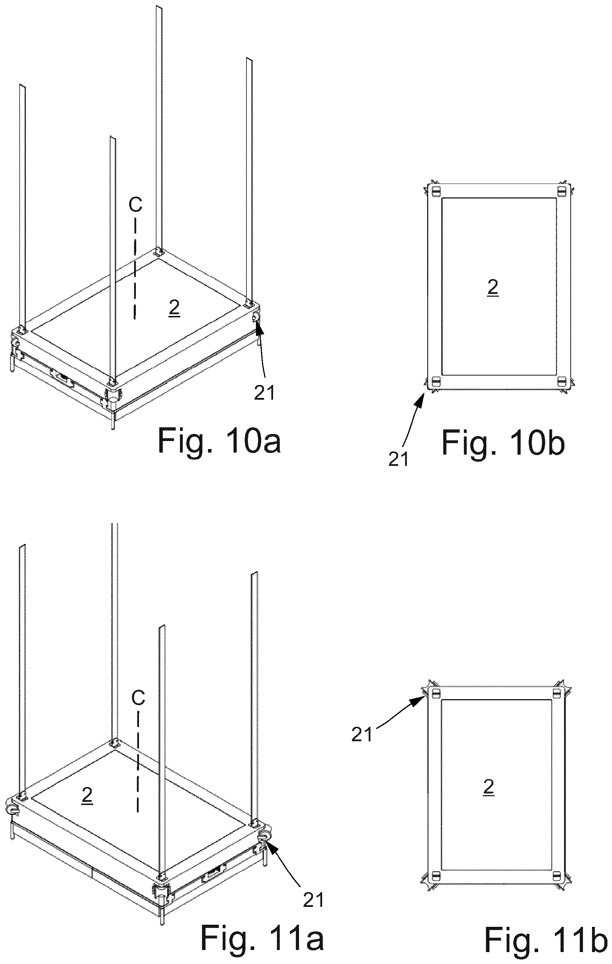

To provide guidance of the first type of lifting frame 2, independent of the stacker frames 6, when moving inside a storage column 105, the lifting frame 2 may optionally comprise extendable guiding elements 21, as illustrated in Figs. 10a, 10b, 11a and 11b. The guiding elements 21 are exemplarily biased towards an extended position, as shown in Figs. 11a and 11b, in which they may interact with vertical column profiles 102 of a storage column 105 to provide guidance of the lifting frame 2. When entering the open end 9 of a stacker frame 6, the guiding elements 21 are forced into a retracted position and further vertical movement of the lifting frame 2 is guided by interaction with internal surfaces of the stacker frame 6. The guiding element 21 may e.g. comprise an arm configured to move a wheel between the extended and the retracted position.

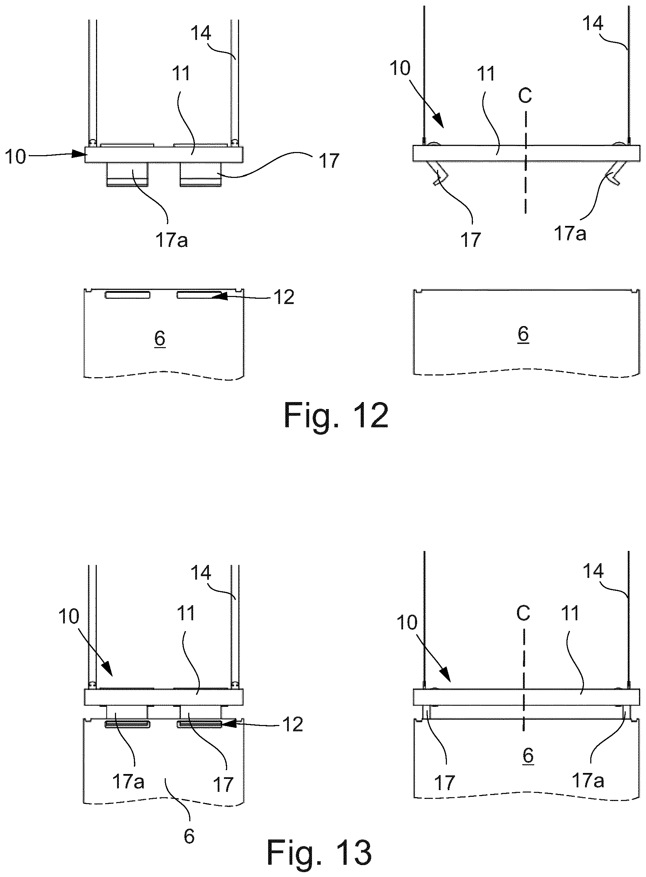

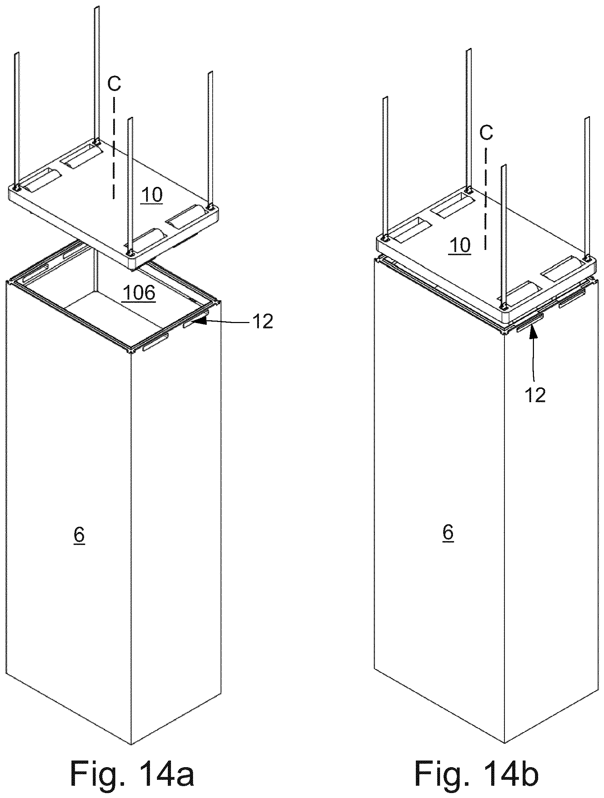

Figs. 12, 13, 14a and 14b show a second type of lifting frame 10, which is configured to engage a stacker frame 6 for lifting or lowering the stacker frame 6 in a storage column 105. The second type of lifting frame 10 is connected to lifting bands 14, which are windable/winchable on or off at least one lifting shaft (not shown herein) to lift or lower the second type of lifting frame 10. The second type of lifting frame 10 exemplarily comprises a horizontal base frame 11 and latches 17 arranged at each of two opposite sides of the base frame 10. A connecting portion 17a of each latch 17 is configured to move between a release position, as shown in Figs. 12 and 14a, and a connecting position, as shown in Figs. 13 and 14b. In the release position the connecting portion 17a is closer to a vertical centerline C of the base frame 10 than in the connecting position. When moving from the release position to the connecting position, the connecting portion 17a is moved away from the vertical centerline C and may extend through a corresponding recess 12 in the side wall 20 of a stacker frame 6. The movement of the latches 17 only within the interior space of the stacker frame 6 is particularly advantageous, as the distance between adjacent stacks of stacker frames 6 can be minimized. Further, the width of the side walls 20 of the stacker frames 6 may also be reduced, as long as the stacker frames 6 are made with a material and/or have a configuration providing sufficient support for the stacker frames 6 stacked above. To provide an increased lifting height, the second type of lifting frame 10 maybe further modified, for example by having a guide shuttle as described in WO 2020/200631 A1.

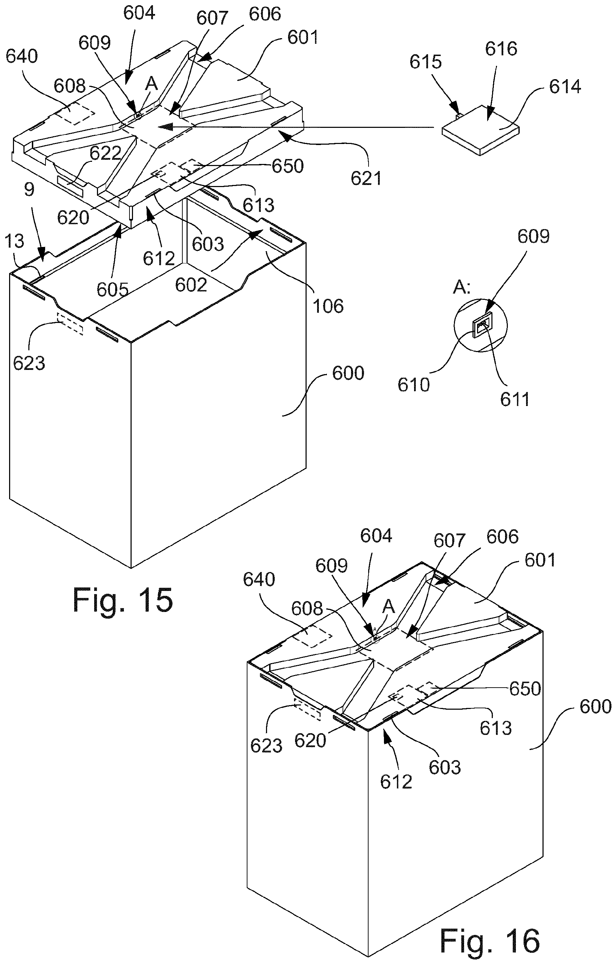

Fig. 15 shows a stacker frame 600, which carries a set of storage containers 106. At its top end 9, a lid 601 can be placed. In this illustration, the lid 601 is above the top end 9. Between the top end 9 and the top storage container 106, a certain space 602 is made available to fully receive the lid 601, such that it does not protrude over the top end 9 vertically. The lid 601 may, for example, sit on the top rim of the top storage container 106.

The lid 601 comprises lid connecting recesses 603 that allow the lid 601 to engage with a lifting frame of a lifting device positioned above the lid 601. The placement of the lid connecting recesses 603 may correspond to the placement of the container connecting recesses 13 of a storage container 106 (see Fig. 7c), such that the lid 601 may be lifted by a lifting frame for storage containers 106.

The lid 601 comprises a top 604 and a bottom 605. At the top side 604 of the lid 601, an exemplarily X-shaped channel 606 is provided. The channel 606 has a central portion 607, which is situated in the center of the top 604. Here, the central portion provides a generally square receiving space 608 for receiving a sensor module 614.

The sensor module 614 can be placed in the receiving space 608. At one lateral delimitation of the receiving space 608, a sensor module interface 609 is provided. It comprises a socket 610 with a plurality of electrical contacts 611, which allow to contact the sensor module 614.

Inside the lid 601, between the top 604 and the bottom 605, an installation space 612 is created, in which a processing unit 613 is arranged. The processing unit 613 is in connection with the sensor module interface 609, such that any sensor module 614 installed in the receiving space 608 can be connected to the processing unit 613. The processing unit 613 comprises a communication device 620, which is configured to receive and/or transmit signals.

The lid 601 may comprise a first electrical connector 622. In this exemplary embodiment, it is arranged n a perimetral edge surface 621 of the lid 601. It is configured to receive electrical power from an external power source through a second electrical connector 623. The second electrical connector 623 may be arranged in an upper region of the stacker frame 600 or between two upright members 102 of the framework structure 100.

In addition, or as an alternative, an internal power source 640 is integrated into the lid 601 to provide electrical power to the processing unit 613 and/or to the sensor module 614.

The processing unit 613 is connected to a memory 650, which is configured for storing instructions to be executed by the processing unit 613. The processing unit 613, in connection with the communication device 620, may provide a programming interface, allowing a user to upload or modify instructions to the memory 650.

By way of example, a sensor module 614 is shown as a box, which has a connector 615 that is configured to connect with the electrical interface 609. Inside a sensor module enclosure 616, sensor electronics may be provided.

A sensor module 614 that is placed on the top 604 of the lid 601 may sense physical parameters outside of the stacker frame 600. This sensor could include one or more of a smoke detector, a temperature sensor, a humidity sensor, a pressure sensor, an optical sensor, an accelerometer, a gyroscope, and a magnetometer.

Fig. 16 shows the lid 601 covering the top end 9 of the stacker frame 600. Hence, the interior space of the stacker frame 600 is completely closed by the lid 601. The sensor module 614 will be connected to the processing unit 613 and sense a certain physical property.

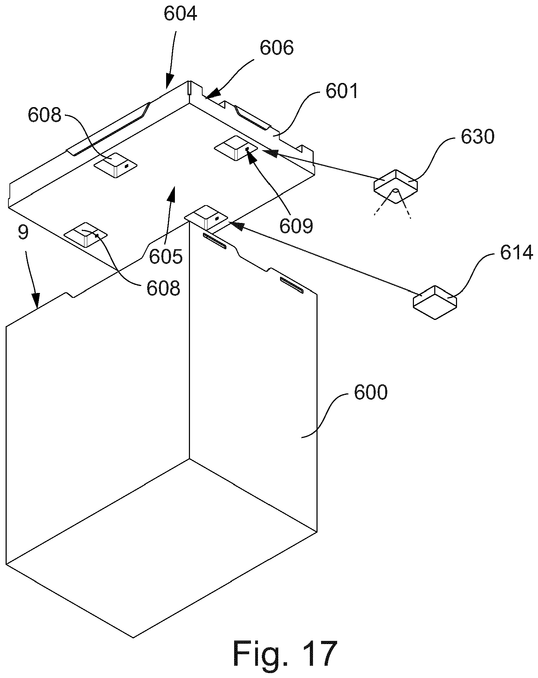

Fig. 17 shows the stacker frame 600 in a perspective view from below. Here, the bottom 605 is shown, which exemplarily comprises four receiving spaces 608, each with an individual interface 609. When sensor modules 614 are placed inside these receiving spaces 608, physical properties inside the stacker frame 600, i.e. in the interior space of the stacker frame 600, can be measured.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### LIST OF REFERENCE NUMBERS

- 1: Prior art automated storage and retrieval system
- 1': storage system
- 2: lifting frame
- 3: grippers
- 6: stacker frame
- 6': upper stacker frame
- 8: stacker frame lifter
- 9: top end
- 10: lifting frame
- 11: horizontal base frame
- 12: connecting recess
- 13: container connecting recess
- 14: lifting band
- 16: upper rim
- 17: latch
- 17a: connecting portion
- 18: bottom section
- 19: top section
- 20: side wall
- 21: guiding element
- 23: recessed portion
- 28: wheel
- 28': wheels
- 29: wheel
- 29': wheel
- 401c: Drive means / second set of wheels in second direction (Y)
- 404: Gripping device
- 404a: Lifting band
- 404b: Gripper
- 404c: Guide pin
- 404d: Lifting frame
- 500: Control system
- 600: stacker frame
- 601: lid
- 602: space
- 603: lid connecting recesses
- 604: top
- 605: bottom
- 606: channel
- 607: central portion
- 608: receiving space
- 609: sensor module interface
- 610: socket
- 611: electrical contact
- 612: installation space
- 613: processing unit
- 614: sensor module
- 615: connector
- 616: sensor module enclosure
- 620: communication device
- 621: perimetral edge surface
- 622: first electrical connector
- 623: second electrical connector
- 640: internal power source
- 650: memory

## Claims

1. A lid (601) for a container (6, 106, 600) of an automated storage and retrieval system, the lid (601) comprising:
a bottom (605), a top (604), and an installation space (612) arranged between the bottom (605) and the top (604),
a processing unit (613) arranged in the installation space (612), and
at least one replaceable sensor module (614),
wherein at least one of the bottom (605) and the top (604) comprises a closed surface,
wherein the at least one sensor module (614) is in signal-communication with the processing unit (613), and
wherein the processing unit (613) is configured to receive signals from the at least one sensor module (614).

2. A lid according to claim 1, wherein the processing unit is configured to conduct a communication task and/or a control task based on the received signals to influence the operation of a device inside a container (6, 106, 600), on which the lid (601) is placed, or to influence the operation of the automated storage and retrieval system, in which a container (6, 106, 600) with the lid (601) placed thereon is stored.

3. A lid (601) according to claim 1 or 2,
wherein the at least one sensor module (614) comprises at least one of:
- a smoke detector,
- a temperature sensor,
- a humidity sensor,
- a pressure sensor,
- an optical sensor,
- an accelerometer,
- a gyroscope, and
- a magnetometer.

4. A lid (601) according to any of claims 1 to 3,
comprising a sensor module interface (609) for removably placing different sensor modules (614) in or on the lid (601) and connecting it with the processing unit (613).

5. A lid (601) according to claim 4,
wherein the bottom (605) of the lid (601) has at least one receiving space (608), in which the at least one sensor module interface (609) is arranged, and/or
wherein the at least one sensor module (614) has a sensor module enclosure (616) having a shape complementary to the receiving space (608).

6. A lid (601) according to any of the preceding claims,
wherein the processing unit (613) is in communication with or comprises a communication device (620), and
wherein the processing unit (620) is configured to transmit signals to an exterior device through the communication device (620).

7. A lid (601) according to any of the preceding claims,
comprising a first electrical connector (622), which is connected to the processing unit (613) and which is configured to connect with a second electrical connector external to the lid (601) to receive electrical power from an external power source.

8. A lid (601) according to any of the preceding claims,
comprising a lighting unit (630) configured to emit light into a direction beneath the bottom (605) of the lid (601) to illuminate an interior space of the container (6, 106, 600), on which the lid (601) is placed.

9. A lid (601) according to claim 8,
wherein the lighting unit (630) is coupled with the processing unit (613), and
wherein the processing unit (613) is configured to selectively operate the lighting unit (630) by supplying it with electrical power.

10. A lid (601) according to any of the preceding claims,
comprising a memory (650) connected to the processing unit (613) for storing instructions to be executed by the processing unit (613), and
a programming interface couplable with the memory (650) and/or the processing unit (613) for uploading or modification of instructions to the memory.

11. A lid (601) according to any of the preceding claims,
wherein the lid (601) comprises lid connecting recesses (603) that are configured to engage with a lifting frame (2) of a lifting device positioned above the lid (601).

12. A stacker frame system for an automated storage and retrieval system,
the automated storage and retrieval system comprising a framework structure (100) defining a plurality of storage columns (105),
the stacker frame system comprising a stacker frame (600) configured to be stored in one of the storage columns (105),
wherein the stacker frame (6, 600) has an open top end (9) and is configured to accommodate a plurality of storage containers (106) stored one on top of another in a vertical stack in an interior space of the stacker frame (600),
wherein the stacker frame (6, 600) has side walls (20) and a base (18), and
wherein the stacker frame system comprises a lid (601) according to any of the preceding claims that can be placed in or on the top end (9) of the stacker frame (6, 600) as container.

13. A stacker frame system according to claim 12,
wherein the top end of the stacker frame (6, 600) and the bottom (605) of the lid (601) are configured such that the lid (601) completely rests inside the top end (9) when placed on the stacker frame (6, 600).

14. An automated storage and retrieval system, comprising
a framework structure (100) defining a plurality of storage columns (105),
a stacker frame system according to claim 16 or 17,
a stacker frame lifter (8) and a container lifter (201, 301, 401),
wherein the container lifter (201, 301, 401) is configured to retrieve a storage container (106) via the open top end (9) of a top stacker frame (6, 600),
wherein the stacker frame lifter (8) is configured to retrieve stacker frames (6, 600) accommodated in a storage column (105).

15. An automated storage and retrieval system according to claim 14,
comprising a lid storage column (105) for storing a plurality of lids (601) according to any of the claims 1 to 13.
